# DEMANDE DE BREVET EUROPEEN

(11) **EP 1 180 427 A1**
(43) Date de publication de la demande: **20.02.2002**
(21) Numéro de dépôt: 01410106.7
(22) Date de dépôt: 16.08.2001
(51) Int. Cl.: B29C 73/02, B32B 17/10, C03C 27/12

(54) **Dispositif de réparation de parebrise à injection de liquide polymérisable**

(30) Priorité: 16.08.2000 FR 0010653
(71) Demandeur: Secours Pare-Brise, 26200 Montélimar (FR)
(72) Inventeur: Chaloin, Jacques, 38160 Saint Vérand (FR)
(74) Mandataire: Hecké, Gérard

(57) **Abrégé**

Dispositif de réparation de pare-brise à injection de résine liquide polymérisable.

Dispositif de réparation de pare-brise en verre, constitué par un injecteur (12) de résine liquide, comportant:
- un corps (14) creux doté d'une chambre de compression (20) en liaison avec un orifice de sortie (30),
- un piston (18) formé par une tige cylindrique déplaçable dans la chambre de compression (20) sous l'action d'une tête de commande (34) manuelle,
- et une ventouse (16) destinée à prendre appui sur le pare-brise (11), et comportant une jupe (26) souple percée dans la partie centrale par un trou (32) d'échappement,
caractérisé en ce que la jupe (26) de la ventouse (16) est prolongée par un embout (28) tubulaire emmanché coaxialement dans l'orifice de sortie (30) de la chambre de compression (20)

## Description

### Domaine technique de l'invention

L'invention est relative à un dispositif de réparation de pare-brise en verre, constitué par un injecteur de résine liquide, comportant:
- un corps creux doté d'une chambre de compression en liaison avec un orifice de sortie,
- un piston formé par une tige cylindrique déplaçable dans la chambre de compression sous l'action d'une tête de commande manuelle,
- et une ventouse destinée à prendre appui sur le pare-brise, et comportant une jupe souple percée dans la partie centrale par un trou d'échappement.

### Etat de la technique

Un tel dispositif est décrit dans le document FR-A-2 766 124, dans lequel des ventouses sont décalées latéralement par au moins un bras de liaison du bloc obturateur d'injection de la résine. Le piston sert à comprimer l'air se trouvant à l'arrière de la résine, et la pression de l'air agit comme un matelas pressurisé qui force le liquide de réparation à pénétrer dans l'impact. Un premier inconvénient d'un tel dispositif est le risque de mélange d'air et de résine liquide, susceptible d'introduire des bulles d'air dans la résine injectée. Un deuxième inconvénient est l'encombrement important dû au décalage des ventouses par rapport à la tête d'injection.

Un autre dispositif connu utilise une cloche rigide équipée à la base d'un joint d'étanchéité. La résine est mise en place au sommet de la cloche, et est mise en pression au moyen d'un piston, alors que le vide est effectué à l'intérieur de la cloche pour chasser l'air, et maintenir celle-ci en place sur le pare-brise. Un tel dispositif est compliqué, car il nécessite une installation de pompage ou de dépression.

Le document WO 9739879 nécessite une tête d'aspiration à jupe connectée par un embout à une pompe à vide.

### Objet de l'invention

L'objet de l'invention consiste à réaliser un dispositif de réparation portatif et autonome, bon marché, ayant un encombrement réduit, et permettant de réparer facilement un pare-brise ayant un dégât par impact, de manière à prévenir tout risque de fissures.

Le dispositif selon l'invention est caractérisé en ce que la jupe de la ventouse est prolongée par un embout tubulaire emmanché coaxialement dans l'orifice de sortie de la chambre de compression.

Selon un mode de réalisation préférentiel, le trou d'échappement de la ventouse possède un diamètre inférieur au diamètre inteme de l'alésage de l'embout. Un épaulement sépare le trou de l'embout dans la direction axiale. Le diamètre du piston est inférieur à celui de la chambre de compression, et à celui de l'alésage de l'embout de la ventouse.

Selon une caractéristique de l'invention, la résine liquide de colmatage est une résine organique transparente, mélangée avec un durcisseur ou durcisseur, et des agents chimiques photo-amorceurs sensibles à un rayonnement lumineux, notamment dans le domaine des ultra-violets.

La polymérisation finale de la résine est effectuée après mise en pression par le piston, et retrait de la ventouse. On peut utiliser à cet effet une lampe à rayonnement ultra-violet.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés dans lesquels:

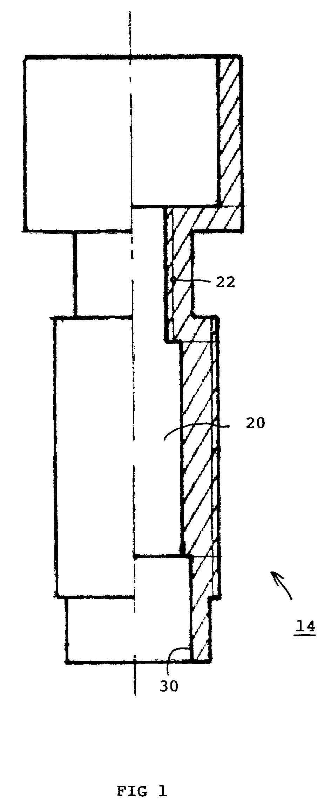

- la figure 1 est une vue du corps de l'injecteur, la demi-vue de gauche étant représentée en coupe;

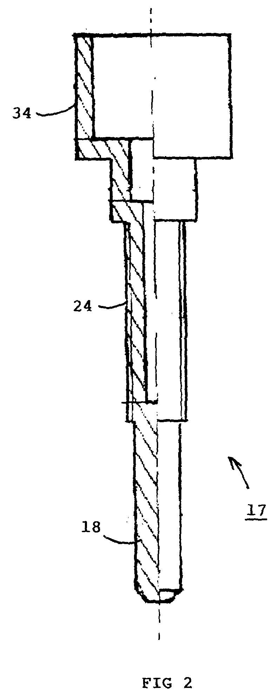

- la figure 2 montre une vue du moyen de mise en pression de la résine, la demi-vue de gauche étant également en coupe;

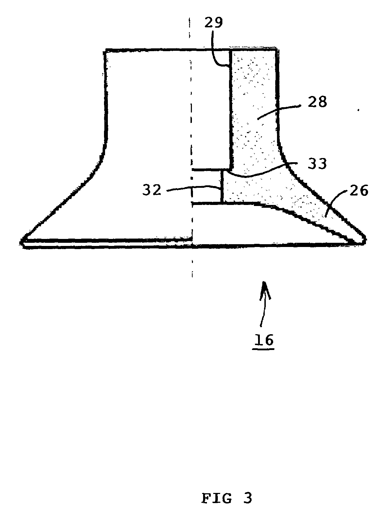

- la figure 3 est une vue à échelle agrandie de la ventouse, la demi-vue de droite étant représentée en coupe;
- la figure 4 montre l'injecteur en position assemblée, le piston étant illustré en position de vissage maximum;
- la figure 5 est une vue identique de la figure 4, le piston étant illustré en position de dévissage;
- la figure 6 représente l'injecteur mis en place sur le pare-brise lors de la réparation.

### Description d'un mode de réalisation préférentiel

Sur les figures, un dispositif de réparation 10 portatif pour pare-brise 11 en verre de véhicule est constitué par un injecteur 12 de résine liquide, composé d'un corps 14 creux équipé d'une ventouse 16, et d'un moyen de mise en pression 17 à piston 18 de manoeuvre.

Le corps 14 de l'injecteur 12 est doté d'une chambre de compression 20 de section cylindrique, dans laquelle se déplace le piston 18 mobile. La partie intermédiaire du corps 14 comprend un alésage taraudé 22 interne destiné à coopérer avec un filetage 24 du moyen de mise en pression 17.

La ventouse 16 est munie d'une jupe 26 souple destinée à épouser la forme du pare-brise 11 à l'endroit d'un impact, et d'un embout 28 tubulaire emmanché coaxialement dans l'orifice 30 de la chambre de compression 20. La partie centrale de la jupe 26 est percée par un trou 32 d'échappement axial débouchant, lequel se trouve en communication directe avec la chambre de compression 20. Le matériau de la ventouse 16 est à base d'élastomère ou de caoutchouc. Le trou 32 de la jupe 26 possède un diamètre inférieur au diamètre inteme de l'alésage 29 de l'embout 28 tubulaire. Un épaulement 33 sépare le trou 32 de l'embout 28 dans la direction axiale.

Le piston 18 est formé par une tige cylindrique ayant un diamètre légèrement inférieur à celui de la chambre de compression 20, et du diamètre de l'alésage 29 de l'embout 28. Le filetage 24 du moyen de mise en pression 17 est disposé entre le piston 18 et une tête de commande 34. La rotation de la tête de commande 34 permet de déplacer le piston 18 en translation pour le rapprocher ou l'éloigner du trou 32 de la jupe 26 en fonction du sens d'actionnement.

La résine de remplissage de la chambre de compression 20 est une résine aromatique transparente et liquide à base époxy, mélangée avec un durcisseur ou accélérateur, et des agents chimiques photo-amorceurs sensibles à un rayonnement lumineux pour effectuer la polymérisation après le retrait de la ventouse 16.

Les agents chimiques photo-amorceurs peuvent à titre d'exemples des dicétones ou des quinones sensibles à la lumière visible.

Il est clair que d'autres types de résines organiques transparentes compatibles avec le verre, peuvent être utilisées, par exemple une résine méthacrylate, ou polyméthacrylate.

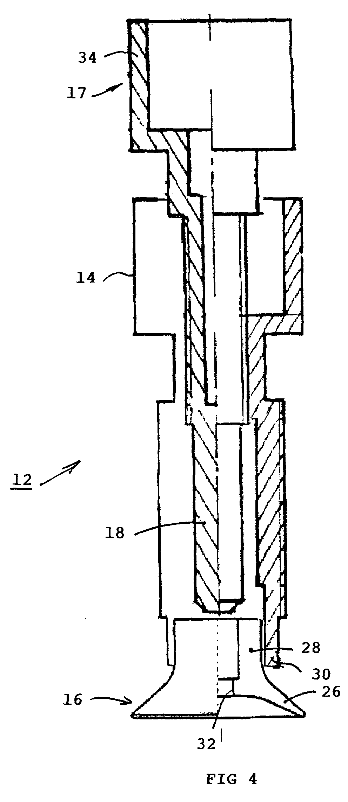

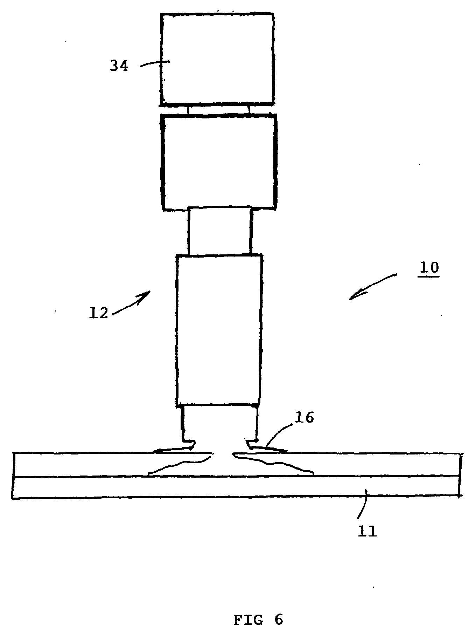

Le fonctionnement de l'injecteur 12 du dispositif de réparation 10 est illustré sur les figures 4 à 6:

La première opération consiste à remplir la chambre de compression 20 avec la résine liquide, soit par le bas à travers le trou 32 de la ventouse 16, soit par le haut après le retrait du moyen de mise en pression 17. Dans les deux cas, la majorité d'air à l'intérieur de la chambre de compression 20 sera chassée automatiquement lors du remplissage progressif de résine.

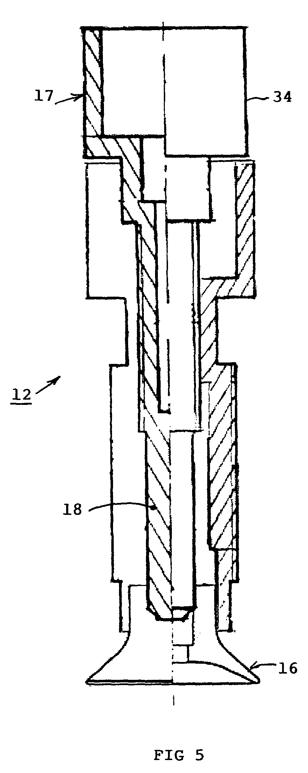

Dans le cas de remplissage par le trou 32, il suffit de retourner l'injecteur 12 en orientant la ventouse16 vers le haut. Le piston 18 est vissé à fond (figure 5) de manière à pénétrer dans l'alésage 29 de l'embout 28. Tout le volume de la chambre de compression 20 est alors occupé par le piston 18. On injecte ensuite la résine liquide par le trou 32, en actionnant la tête de commande 34 dans le sens du dévissage. Le volume de la chambre de compression 20 augmente, et se remplit progressivement de résine sans présence notable d'air. La quantité de résine coulée dépend de la forme de l'impact à réparer.

Dans l'autre cas de remplissage s'effectuant à l'opposé du trou 32, on enlève complètement le moyen de mise en pression 17, et on remplit la chambre de compression 20 en bouchant le trou 32. On introduit ensuite le piston 18 dans la résine.

La deuxième opération consiste à appliquer la ventouse 16 sur le pare-brise 11 en recouvrant le point de choc de l'impact avec une certaine pression de contact.

On visse ensuite la tête de commande 34 pour rapprocher l'extrémité du piston 18 du trou 32, ce qui provoque une montée en pression progressive de la résine liquide à l'intérieur de la chambre 20. La résine transparente et pressurisée sort par le trou 32, et est injectée uniformément dans tout le volume de l'impact en présentant une surface lisse.

La troisième opération consiste à polymériser la résine injectée dans l'impact par des moyens de photo-réticulation susceptibles de générer un rayonnement lumineux, notamment à ultraviolet. La matrice organique de la résine est ainsi réticulée par éclairage en lumière visible. Le temps de durcissement est de quelques dizaines de secondes selon le type de résine utilisée L'aspect de l'impact réparé est lisse, et est comparable à celle du verre du pare-brise 11.

Selon une variante de réalisation, la tête de commande 34 au lieu d'être rotative, peut être à actionnement en translation comme celle d'une seringue.

## Revendications

1. Dispositif de réparation de pare-brise en verre, constitué par un injecteur (12) de résine liquide, comportant:
- un corps (14) creux doté d'une chambre de compression (20) en liaison avec un orifice de sortie (30),
- un piston (18) formé par une tige cylindrique déplaçable dans la chambre de compression (20) sous l'action d'une tête de commande (34) manuelle,
- et une ventouse (16) destinée à prendre appui sur le pare-brise (11), et comportant une jupe (26) souple percée dans la partie centrale par un trou (32) d'échappement,
**caractérisé en ce que** la jupe (26) de la ventouse (16) est prolongée par un embout (28) tubulaire emmanché coaxialement dans l'orifice de sortie (30) de la chambre de compression (20).

2. Dispositif de réparation de pare-brise selon la revendication 1, **caractérisé en ce que** le trou (32) d'échappement de la ventouse (16) possède un diamètre inférieur au diamètre interne de l'alésage (29) de l'embout (28).

3. Dispositif de réparation de pare-brise selon la revendication 2, **caractérisé en ce qu'**un épaulement (33) sépare le trou (32 de l'embout (28) dans la direction axiale.

4. Dispositif de réparation de pare-brise selon la revendication 2 ou 3, caractérisé en ce le diamètre du piston (18) est inférieur à celui de la chambre de compression (20), et à celui de l'alésage (29) de l'embout (28) de la ventouse (16).

5. Dispositif de réparation de pare-brise selon l'une quelconque des revendications précédentes, **caractérisé en ce que** la résine liquide de colmatage est une résine organique transparente, mélangée avec un durcisseur ou accélérateur, et des agents chimiques photo-amorceurs sensibles à un rayonnement lumineux, notamment dans le domaine des ultra-violets, pour opérer la polymérisation.

6. Dispositif de réparation de pare-brise selon la revendication 5, **caractérisé en ce que** la polymérisation finale de la résine est effectuée après mise en pression par le piston (18), et retrait de la ventouse (16).

7. Dispositif de réparation de pare-brise selon la revendication 5, **caractérisé en ce que** la résine est une résine aromatique à base époxy.

8. Dispositif de réparation de pare-brise selon la revendication 5, **caractérisé en ce que** la résine est une résine polyméthacrylate.
